# EUROPEAN PATENT SPECIFICATION

(11) **EP 4 566 780 B1**
(45) Date of publication and mention of the grant of the patent: **27.05.2026**
(21) Application number: 24217371.4
(22) Date of filing: 04.12.2024
(51) Int. Cl.: B27M 1/08, B23Q 3/08

(54) **MACHINE FOR MACHINING A PANEL AND METHOD FOR MACHINING A PANEL**
MASCHINE ZUR BEARBEITUNG EINER PLATTE UND VERFAHREN ZUR BEARBEITUNG EINER PLATTE
MACHINE POUR L'USINAGE D'UN PANNEAU ET MÉTHODE POUR L'USINAGE D'UN PANNEAU

(30) Priority: 05.12.2023 IT 202300025992
(43) Date of publication of application: 11.06.2025
(73) Proprietor: SCM Group S.p.A., 47921 Rimini (RN) (IT)
(72) Inventor: FIORENTINI, Adriano, 47921 Rimini (RN) (IT)
(74) Representative: Gallo, Gianluca

(56) References cited:
- EP-B1- 0 465 435
- DE-B3- 102009 017 856
- US-A1- 2003 015 001
- US-A1- 2022 379 464

## Description

This invention relates to a machine for machining a panel according to the preamble of present claim 1 and to a method for machining a panel, according to the preamble of present claim 13. Such a machine and such a method are known from the document EP 0 465 435 B1.

In particular, the invention relates to a machining centre, or MC for short, for machining panels made of wood or comparable materials, such as, for example, wood by-products, metal, plastic and composites.

More in detail, the invention relates to a machining centre for machining wooden panels and to a method for machining a panel, where the panel is loaded, or unloaded, manually by an operator.

As is well known, a MC for machining wooden panels may comprise a plurality of gripping elements, in particular, supporting suction cups, or suction cups for short, which are designed to support and hold the panel in place while it is being machined. The suction cups are typically used in the machining of panels, that is to say, of parts having two dimensions (length and width) which are predominant with respect to a third dimension (thickness), whilst parts made of solid wood, for example, wooden "squares", i.e. oblong elements with rectangular cross section, are typically supported and held in place by suitable grippers. The suction cups are distributed in a working area oriented according to a working plane. The working plane is typically parallel to the supporting surface of the MC and may extend along a longitudinal axis and a transverse axis perpendicular to the longitudinal axis. The MC may comprise, for example, a plurality of bars (forming what is known as a barred work table, or barred table for short), which may extend, for example, along the transverse axis, may be disposed, for example, alongside and parallel to each other, and may be movable along the longitudinal axis both manually and automatically. Each bar of the barred table may comprise a plurality of suction cups for supporting and holding the panel to be machined in place. The suction cups may be coupled to each bar, for example removably and/or movably, either manually or automatically, along the transverse axis. Moving the bars along the longitudinal axis and the suction cups along the transverse axis makes it possible to dispose the suction cups in the working area so as to adapt to one or more panels to be machined. The working area has an operator side, oriented longitudinally and facing an operator zone. The operator zone is the zone from which the operator typically controls the MC, for example using a control desk located in the operator zone. Typically, for safety reasons, the MC has only one operator side, which is the side that is directly accessible to the operator working in the operator zone, for example for panel loading and unloading operations.

Typically, a MC may comprise a machining unit configured to support and move a machining tool on the working area. In particular, the machining unit may comprise a chuck, to which the machining tool may be coupled, for example removably. The machining tool, rotating on the chuck (for example, an electric chuck) can machine the panel by stock removal.

Typically, through the machining unit, the tool may be movable relative to the working area, for example along three Cartesian axes, in particular, the longitudinal axis, the transverse axis and a vertical axis orthogonal to the longitudinal and transverse axes. Furthermore, the tool may be movable relative to the working plane according to one or more rotary axes: for example, two rotary axes typically called B and C.

MCs may be configured to be able to support a plurality of panels to be machined simultaneously in the working area, so as to be able to machine the plurality of panels in sequence and uninterruptedly. This technique increases the efficiency and productivity of the MC, reducing machine downtimes due to panel loading and unloading operations for each machining process. In this case, the working area may be considered as being subdivided virtually into a plurality of working zones where the panels can be loaded and unloaded. The working zones may therefore be proximal or distal to the operator side.

MCs which are configured to support a plurality of panels simultaneously in the working area may be loaded and/or unloaded manually or automatically. In MCs loaded automatically, panel loading and unloading operations may be carried out, for example, by devices outside the machining centre, such as robots, which are expensive, cumbersome and require additional safety systems.

For example, Figure 1 in patent document EP3804930A1 shows a machining centre for machining a wooden panel and comprising a robot for loading and unloading the panel into and from the different working zones which are identified, in the working area, by the reference letters A, B., C and D. In this example, storage areas must be provided at known positions so that the robot can go and pick up or unload the panels correctly. In addition, to improve operator safety, the robot works in the zone of the machine opposite the operator zone. However, having the automatic loading and unloading system with the robot in the zone opposite the operator zone increases the overall dimensions of the machine. Moreover, it is evident that this solution involves high costs and the need to provide the machine with additional safety systems to ensure the safety of the operator during the operation of the MC.

In another example, automatic loading and unloading may be carried out by devices inside the machining centre such as, for example, pick-up and moving systems located in the working area. Such pick-up and moving systems, being fully automatic, involve high costs and make the MC complex, resulting in a high number of breakdowns and increased machine downtime.

For example, patent document EP2842706A1 describes a MC for machining square wooden elements and comprising a barred working plane fitted with grippers for supporting and holding in place the elements to be machined. Inside the working area there is also an additional gripping system, located between the bars of the barred plane, to load and unload the wooden elements automatically in the different working areas. The use of grippers to support and hold the elements in place in the working area makes the MC unsuitable for the machining of panels. Further, the loading and unloading system is configured for automatically loading and unloading square wooden elements and thus requires storage areas to be provided to store the square elements and a feeding system to move the square elements from the storage areas to the working plane. Furthermore, the feeding system is located in the zone of the machine opposite the operator zone, which means increasing the overall dimensions of the machine. Further, the feeding system and the additional gripping system, being fully automatic, involve high costs and make the MC more complex, with the risk of frequent failures and machine downtimes.

In manually fed MCs, an operator withdraws the panels to be machined from a storage unit or storage zone and loads and unloads them into and from the different working zones of the working area. A manually loaded MC is therefore more economical and compact than automatically loaded MCs. Moreover, a manually loaded MC is simpler and less subject to breakdowns and downtime. As is known, however, for their own safety, operators have access to the working area of the MC only from the operator side. Thus, panel loading and unloading operations are easy when working in zones close to the operator side, but the same is not true when working in zones further away from the operator side. Indeed, in the latter case, the operator has to lean over the working area while supporting and transporting the panel to be machined or already machined, with a serious risk of accidents or of dropping and damaging the panel or the MC.

The aim of this disclosure is to provide a machine for machining a panel and a method for machining a panel to overcome the above mentioned disadvantages of the prior art.

In particular, the aim of this disclosure is to provide a machine for machining a panel and a method for machining a panel to make it easier and safer for the operator to carry out loading and/or unloading operations, especially in the working zones opposite the operator side.

Another aim of this disclosure is to provide a machine for machining a panel and which is compact, economical and reliable.

These aims are fully achieved by the machine for machining a panel and the method for machining a panel according to this disclosure, as characterized in the appended claims.

In this description, reference will be made mainly to means for loading a panel into the machine for machining a panel and to the steps of loading a panel in the method for machining a panel, in particular in a zone of the working area of the MC distal to the operator side, so as to make it easier for the operator to load the panel into this zone. For the sake of brevity, the steps of unloading the panel from the machine are not described since these, with the necessary changes, are the same as the steps of loading but performed in a different order. Similarly, the means for loading the panel, that is to say, the auxiliary system for the operations described herein to load the panel from the working zone proximal to the operator side to the working zone distal to the operator side may be used in the same way for the operations to unload the panels from the working zone distal to the operator side to the working zone proximal to the operator side. Therefore, even if the description refers mainly to the loading of panels in a machine for machining a panel, it is understood that the scope of protection of the invention described herein, defined by the accompanying claims, comprises the loading and/or unloading of the panels in a machine for machining a panel and in the respective method.

This disclosure provides a machine for machining a panel, comprising a plurality of supporting suction cups, configured to support and lock a panel to be machined on a working area oriented according to a working plane extending along a longitudinal axis and a transverse axis perpendicular to the longitudinal axis. In particular, the working area has an operator side oriented longitudinally and facing an operator zone, so as to be directly accessible to an operator positioned in the operator zone. Furthermore, the plurality of supporting suction cups may be distributed, in the working area, along the transverse axis, between a zone proximal to the operator side (called proximal zone of the working area) and a zone distal to the operator side (called distal zone of the working area). In particular, the machine may also comprise a machining unit which is movable on the working area and configured to machine the panel. More specifically, the machine may also comprise a raiser which is movable between a lowered position, where it is disposed below the working plane, and a raised position, where it is configured to support the panel at a level above the working plane. The machine may also comprise an auxiliary system, having an active configuration, where it is operatively coupled to the panel, and an inactive configuration, where it is uncoupled from the panel. The auxiliary system may be movable along the transverse axis so as to move the panel from the proximal zone to the distal zone of the working area to make it easier for the operator to load the panel in the zone distal to the working area.

Advantageously, the raiser may extend along the transverse axis, from the proximal zone to the distal zone of the working area, and may be disposed in the working area so it is spaced from the auxiliary system along the longitudinal axis. That way, the auxiliary system and the raiser can act in conjunction to support the panel when the auxiliary system is in the active configuration and the raiser is at the raised position. This allows panels of different shapes and sizes to be supported better in the working plane, particularly advantageously when the auxiliary system is moving the panels along the transverse axis.

More advantageously, the raiser may comprise a first raiser, configured to support the panel in the proximal zone of the working area, and a second raiser, configured to support the panel in the distal zone of the working area, so as to make it easier to support and handle more than one panel in the working area of the machine, in particular one in the proximal zone and one in the distal zone of the working area. Additionally, to make it even easier to support and handle the panels in the working area of the machine, the first raiser and the second raiser may be movable between the raised position and the lowered position independently of each other.

Moreover, the machine may comprise a plurality of raisers, each of the plurality of raisers extending along the transverse axis, parallel to the other raisers of the plurality of raisers and disposed in the working area so as to be spaced from the other raisers of the plurality of raisers along the longitudinal axis, so that the machine, and in particular the working area, can be adapted to panels of different shapes and sizes.

Advantageously, the auxiliary system may be coupled to the raiser. In particular, the auxiliary system may be coupled to the raiser so as to be movable along a vertical axis perpendicular to the working plane. The auxiliary system may thus move together with the raiser as the raiser moves from the lowered position, where it is disposed below the working plane, to the raised position, where it is configured to support the panel at a level above the working plane, and vice versa. In addition, the auxiliary system may move relative to the raiser along the vertical axis, for example into the active configuration, where it is operatively coupled to the panel, or into the inactive configuration, where it is uncoupled from the panel. This movement may be carried out via an actuator such as, for example, an electric motor or a piston.

More advantageously, the machine may comprise a plurality of auxiliary systems, each coupled to a respective raiser of the plurality of raisers.

Advantageously, the auxiliary system may be disposed along a transverse side of the working area parallel to the transverse axis. This gives the machine, and in particular the working area, a more simple mechanical structure. More advantageously, the machine may have two auxiliary systems, one at each transverse side of the working area.

The auxiliary system may also comprise a gripper, or a locking suction cup, configured to grip the panel when the auxiliary system is in the active configuration, and to release the panel when the auxiliary system is in the inactive configuration.

Furthermore, the auxiliary system comprises according to the invention, a transverse actuator configured to move the auxiliary system along the transverse axis, from the proximal zone of the working area to the distal zone of the working area.

The transverse actuator may be an electric motor, synchronous or asynchronous, for example, or a pneumatic actuator such as a piston, for example.

Advantageously, the machine may comprise a plurality of reference stops for referencing the panel relative to the working area, and the auxiliary system comprises a reference stop of the plurality of reference stops.

More advantageously, the machine may comprise a plurality of bars, where each of the plurality of bars extends along the transverse axis and supports a plurality of supporting suction cups, and where the plurality of bars are disposed in the working area alongside and parallel to each other.

This disclosure provides a method for machining a panel in a machine for machining wood, comprising, for example, a plurality of supporting suction cups, configured to support and lock a panel to be machined on a working area oriented according to a working plane extending along a longitudinal axis and a transverse axis perpendicular to the longitudinal axis, where the working area has an operator side oriented longitudinally and facing an operator zone, to be directly accessible to an operator positioned in the operator zone, the plurality of supporting suction cups being distributed, in the working area, along the transverse axis, between a zone proximal to the operator side and a zone distal to the operator side. In particular, the method may comprise the step of moving a raiser from a lowered position, where it is disposed below the working plane of the machine, to a raised position, where it is configured to support the panel at a level above the working plane. Furthermore, the method may comprise the step, performed by the operator, of resting the panel on the raiser in the proximal zone of the working area. Additionally, the method may comprise the step of passing an auxiliary system from an inactive configuration, where it is uncoupled from the panel, to an active configuration, where it is operatively coupled to the panel. In particular, the method may comprise the step of moving the auxiliary system along the transverse axis from the proximal zone to the distal zone of the working area. Furthermore, the method may comprise the step of moving the raiser from the raised position to the lowered position. In particular, the method may comprise the step of locking the panel in the working plane by means of at least one suction cup of a plurality of supporting suction cups. Furthermore, the method may comprise the step of passing the auxiliary system from the active configuration to the inactive configuration.

Advantageously, the raiser may extend along the transverse axis and may support the panel during the entire step of moving the auxiliary system along the transverse axis from the proximal zone to the distal zone of the working area.

More advantageously, the raiser comprises a first raiser, configured to support the panel in the proximal zone of the working area, and a second raiser, configured to support the panel in the distal zone of the working area, and during the step of moving the raiser from the lowered position to the raised position, both the first raiser and the second raiser are moved, whilst during the step of moving the raiser from the raised position to the lowered position, only the second raiser is moved.

Furthermore, according to the method, the step of moving the auxiliary system along the transverse axis from the proximal zone to the distal zone of the working area may be carried out automatically, and according to the invention, via a transverse actuator. This actuator may be an electric motor, synchronous or asynchronous, for example, or a pneumatic actuator such as a piston, for example.

Advantageously, the method may also comprise the step, carried out by the operator, of abutting the panel against a plurality of reference stops so as to reference it relative to the working area.

This and other features will become more apparent from the following description of a preferred embodiment, illustrated purely by way of nonlimiting example in the accompanying drawings, in which:
- Figure 1 shows a perspective view of a machine for machining a panel according to the invention;
- Figure 2 shows a side view of a first detail, in a first embodiment, of the machine for machining a panel according to the invention;
- Figure 3 shows a perspective view of the first detail, in the first embodiment, of the machine for machining a panel according to the invention;
- Figure 4 shows another perspective view of the first detail, in the first embodiment, of the machine for machining a panel according to the invention;
- Figure 5 shows a perspective view of a second detail, in a second embodiment, of the machine for machining a panel according to the invention;
- Figure 6 shows another perspective view of the second detail, in the second embodiment, of the machine for machining a panel according to the invention;
- Figure 7 shows a front view of a third detail, in a further embodiment, of the machine for machining a panel according to the invention; and
- Figure 8 shows a flow diagram of the method for machining a panel according to the invention.

Hereinafter in this disclosure, directional terms such as "right", "left", "front", "rear", "top", "bottom", "upper", "lower", "lateral" etc. are used with reference to the accompanying drawings. Since components and/or elements and/or embodiments of this invention may be positioned and/or operated in several different orientations, the directional terms are used solely by way of nonlimiting example.

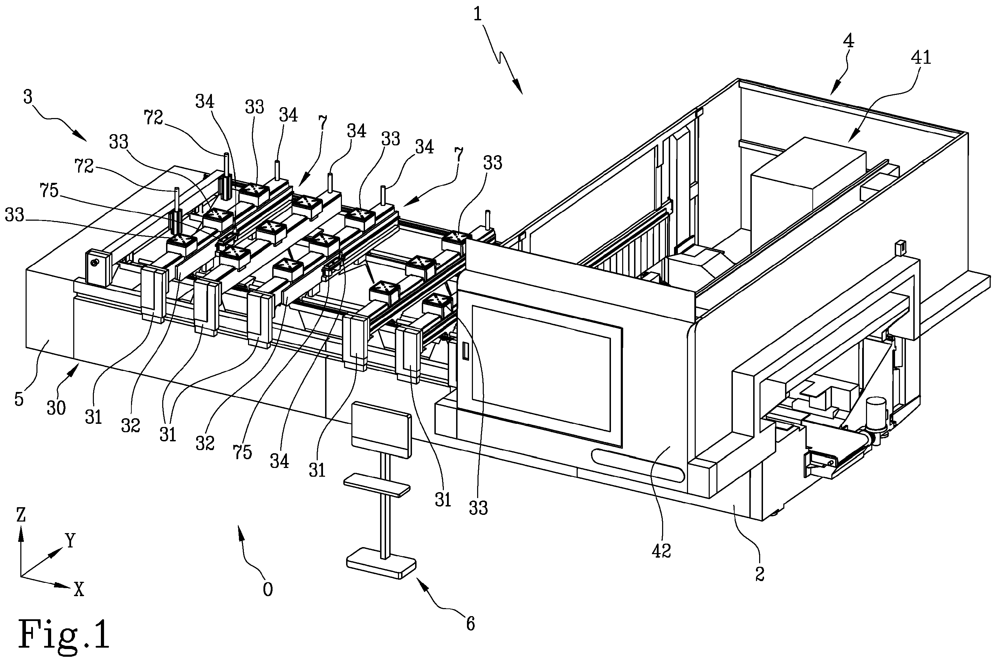

Figure 1 shows a machine 1 for machining a panel, in particular, a machining centre, or MC for short.

The machine 1 may comprise a bed 2 configured to substantially support all the fixed and movable parts of the machine 1.

The machine 1 may comprise a plurality of supporting suction cups 33 configured to support and lock in place a panel P to be machined. The plurality of supporting suction cups 33 is particularly suitable for supporting and locking panels in place, in particular panels made of wood or comparable materials. Each suction cup of the plurality of suction cups 33 may, in effect, be in fluid-dynamic communication with a vacuum generating system (not shown in the drawings). When a main face of the panel P, that is to say, the face of the panel P with the largest surface area, is rested on one or more suction cups of the plurality of suction cups 33, negative pressure is created between the suction cups and the panel P so that the panel P is held in place on the suction cups of the plurality of supporting suction cups 33. The plurality of suction cups 33 may define a working area 3 oriented according to a working plane which may extend, for example, along a longitudinal axis X and a transverse axis Y perpendicular to the longitudinal axis X. The working plane may, for example, be substantially parallel to a supporting surface, such as a floor, which supports the machine 1. The plurality of suction cups 33 may be coupled to a bar 31, in particular to a plurality of bars 31. Furthermore, each of the plurality of bars 31 may extend along the transverse axis Y. Additionally, the bars of the plurality of bars 31 may be disposed alongside and spaced from each other along the longitudinal axis X. Furthermore, each of the plurality of bars 31 may be coupled to the bed 2 movably along the longitudinal axis X, and this movement may be carried out either manually, or automatically by means of actuators such as, for example, electric motors, in particular, synchronous motors. The supporting suction cups of the plurality of suction cups 33 may be coupled to each of the plurality of bars 31 removably and/or movably along the transverse axis Y. This movement may be carried out either manually, or automatically by means of actuators such as, for example, electric motors, in particular, synchronous motors. The suction cups of the plurality of suction cups 33 may therefore be disposed in the working area 3 in various different positions or configuration (for example in row or matrix form, etc) so that the machine 1 can support and lock in place one or more panels P of different shapes and sizes. In the case of two more panels P, two or more virtual working zones of the working area 3 may be defined.

Furthermore, the working area 3 may have an operator side 30 which is parallel, for example, to the longitudinal axis X. The operator side 30 may face an operator zone O where, typically, there is an operator who controls the MC. The operator side 30 may be directly accessible to the operator working in the operator zone, for example for panel P loading and unloading operations. In the operator zone O there may be a control desk 6, also called operator position, for controlling the machine 1, as shown, for example, in Figure 1. Using the control desk 6, the operator may, for example, program, manage and control the machine 1.

The machine 1 may also comprise a machining unit 4, configured to machine the panel P. The machining unit may be coupled to the bed 2 and movable in the working plane, for example along the longitudinal axis X.

The machining unit 4 may comprise a machining head 41, housed in a protective enclosure 42. The machining head 41 may be movable relative to the working plane 3, for example along the transverse axis Y and the longitudinal axis X. Furthermore, the machining head 41 may be movable relative to the working plane 3, for example along a vertical axis Z, orthogonal to the longitudinal axis X and to the transverse axis Y. The machining head 41 may also have one or more rotation axes. The machining head 41 may comprises a chuck, such as, for example, an electric chuck, which is configured to support, for example removably, and drive in rotation a tool for machining the panel P.

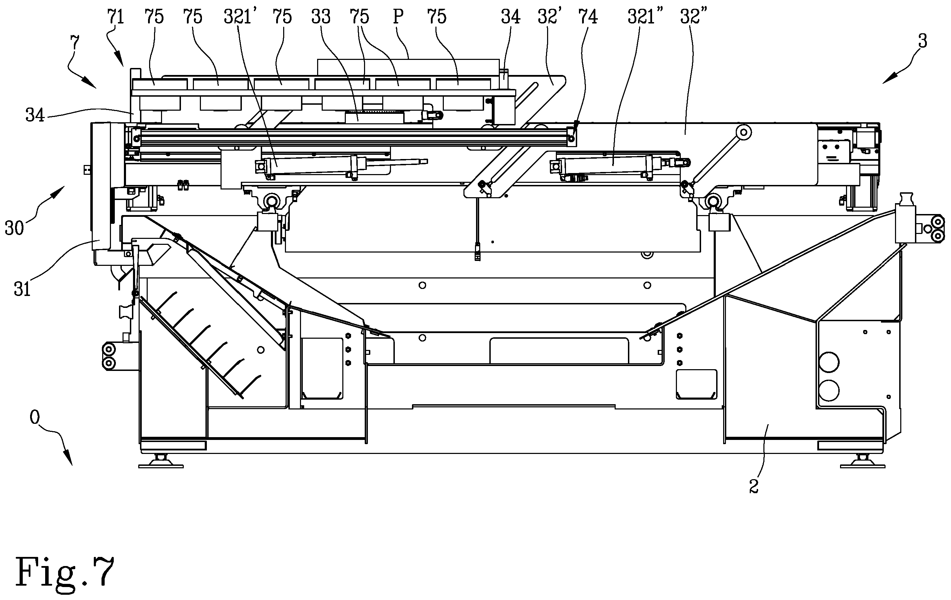

The machine 1 may also comprise an electric panel 5, configured to house electrical devices, for example for controlling and managing the machine 1. As shown, for example, in Figure 1, the machine 1 may comprise one or more raisers 32. The raisers 32 may extend along the transverse axis Y. Additionally, the raisers 32 may be disposed alongside each other, spaced apart and parallel to each other along the longitudinal axis X. Furthermore, the raisers 32 may be coupled to the bed 2 movably along the longitudinal axis X, and this movement may be carried out either manually, or automatically by means of actuators such as, for example, electric motors, in particular, synchronous motors. Furthermore, each raiser 32 may be coupled to the bed 2 by a respective bar of the plurality of bars 31. Moreover, the raisers 32 may be movable independently, or synchronously, between a lowered position, where they are disposed below the working plane, and a raised position, where they are configured to support the panel P at a level above the working plane. This movement may be performed, for example, along the vertical axis Z. In particular, at the raised position, at least one portion of the raisers 32 rises above the working plane so as to provide support for the panel P. More specifically, a panel P, supported by one or more raisers 32, is at a level above the plurality of suction cups 33 and is therefore free to be positioned correctly in the working plane by sliding on the raisers 32. As shown, for example, in Figure 7, the raisers 32 may comprise a first raiser 32', configured to support the panel P in a zone of the working area proximal to the operator side 30 and called "proximal zone" for short. Furthermore, the raisers 32 may comprise a second raiser 32", configured to support the panel P in a zone of the working area distal to the operator side 30 and called "distal zone" for short. Each first raiser 32' of each raiser 32 may be coupled to a respective first actuator 321' to move each first raiser 32' from the lowered position to the raised position, and vice versa. Each first actuator 321' may be, for example, a pneumatic piston or an electric motor. Furthermore, each second raiser 32" of each raiser 32 may be coupled to a respective second actuator 321" to move each second raiser 32" from the lowered position to the raised position, and vice versa. Each second actuator 321" may be, for example, a pneumatic piston or an electric motor.

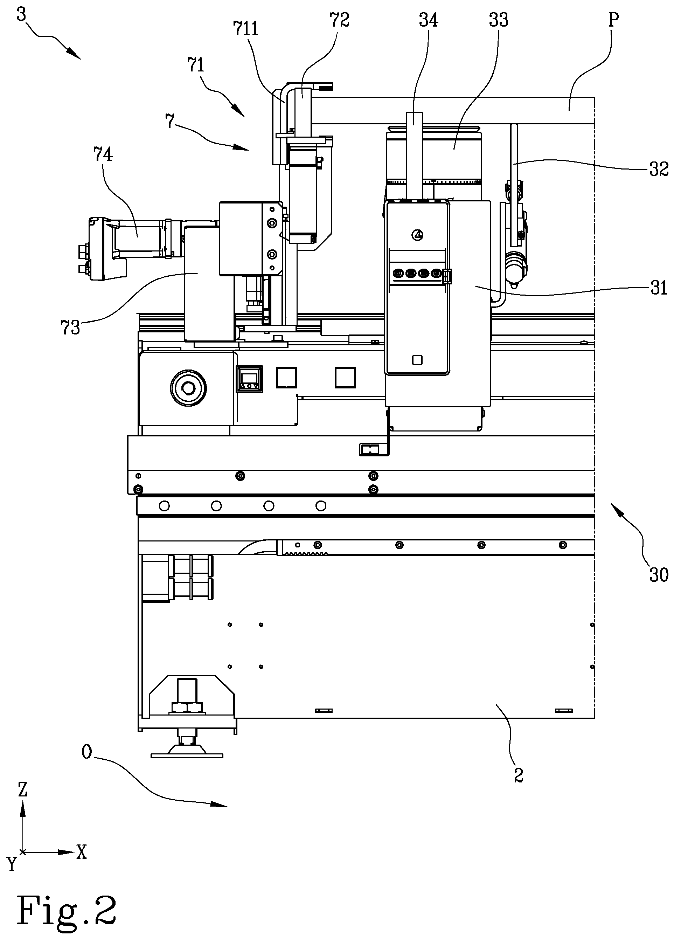

With reference to the example shown in Figures 1 and 2, the machine 1 may comprise a plurality of reference stops, 34, 72 for referencing the panel P relative to the working area 3. In particular, the machine may comprise a transverse reference stop 34, which allows referencing the panel P along the transverse axis Y, and a longitudinal reference stop 72, which allows referencing the panel P along the longitudinal axis X. More specifically, each of the plurality of reference stops 34, 72 may be, for example, a cylindrical stem which is movable between a retracted position, where it is under the working plane, and an extended position, where it rises above the working plane. For example, while the panel P is supported at the raised position by one or more raisers 32, the operator may move the panel P until it abuts the plurality of reference stops 34, 72 so as to reference it relative to the working area 3. The movement described is carried out by making the panel P slide on one or more raisers 32.

With reference to the example shown in Figure 1, the machine 1 may comprise one or more auxiliary systems 7 for loading a panel P to be machined, in particular into the distal zone of the working area.

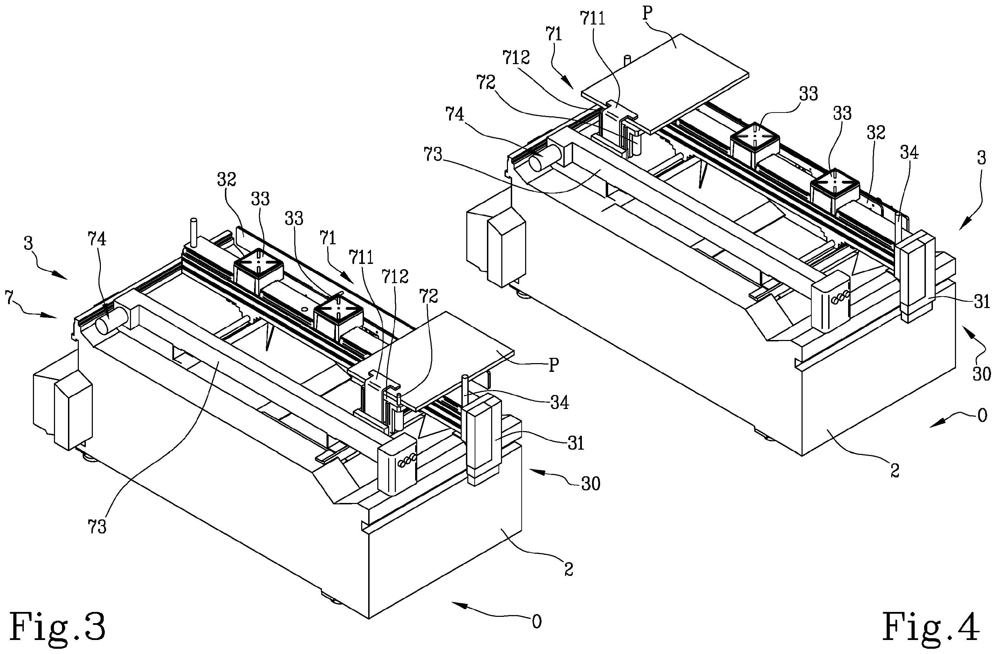

As shown, for example, in Figures 4 and 3, respectively, the auxiliary system 7 may have an active configuration, in which it is operatively coupled to the panel P, and an inactive configuration, in which it is uncoupled from the panel P. Furthermore, the auxiliary system 7 may have a parked configuration. The parked configuration has the purpose of minimizing the space occupied by the auxiliary system 7 in the working area so as not to interfere with the machining processes to be carried out on the panel P. For example, the parked configuration may coincide with a position of the auxiliary system 7 outside the working area 3 or with a position of the auxiliary system 7 under the working plane.

For example, as shown in Figures 2, 3 and 4, the auxiliary system 7 may comprise a locking gripper 71. The locking gripper 71 may comprise an upper jaw 711and a lower jaw 712, movable relative to each other to grip and release the panel P. In particular, the locking gripper may grip the panel P by tightening it between the upper jaw 711 and the lower jaw 712. The lower jaw 712 may also be used as a support for the panel P, for example during the step of referencing the panel P by means of the plurality of reference stops 34, 72, for example, coordinately with one or more raisers 32.

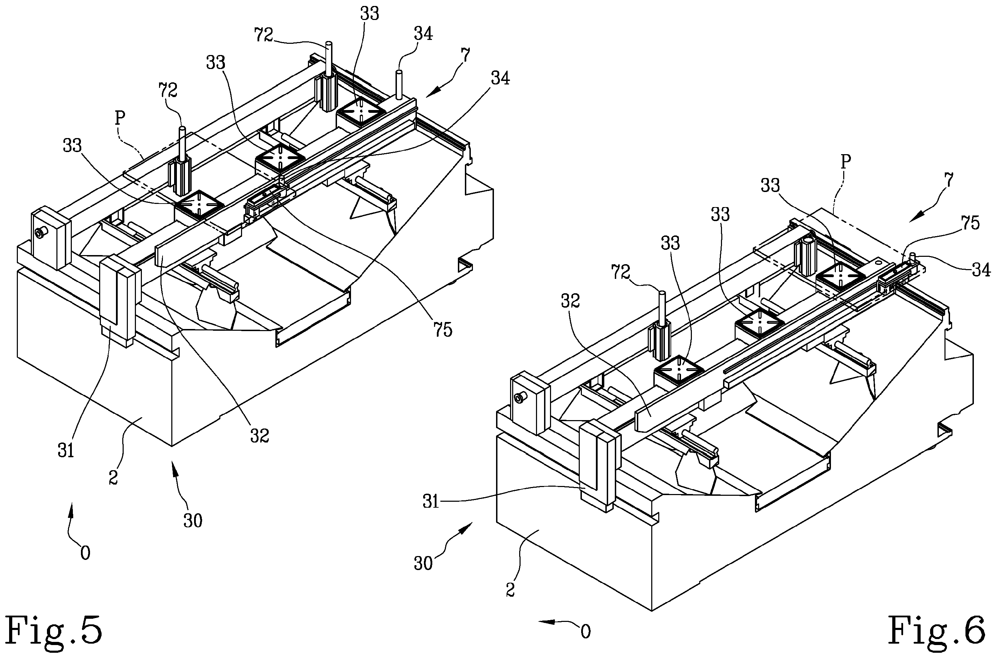

In another example, shown in Figures 5, 6 and 7, the auxiliary system 7 may comprise one or more locking suction cups 75. Like the plurality of supporting suction cups 33, the locking suction cups 75 may be connected fluid-dynamically to a vacuum source so as to be able to grip or release the panel P.

Furthermore, the auxiliary system 7 may be movable along the transverse axis Y so as to move the panel P from the proximal zone to the distal zone of the working area 3 to make it easier for the operator to load the panel P in the zone distal to the working area 3. Figure 3, shows the auxiliary system 7, for example, in the inactive configuration, in the proximal zone of the working area 3, while Figure 4 shows the auxiliary system 7, for example, in the active configuration in the distal zone of the working area 3, after the movement along the transverse axis Y has been completed. This movement may be manual and may be carried out by the operator using, for example, a rod or extension to make it easier for the operator to move the auxiliary system 7 along the transverse axis Y. Otherwise, the movement may be automatic and carried out, for example, by a transverse actuator 74 driven by the operator, for example using a control, in particular a control located in proximity to the operator side 30.

As shown in the example in Figures 2, 3 and 4, the auxiliary system 7 may comprise the longitudinal reference stop 72.

As shown in the example in Figures 5, 6 and 7, the auxiliary system 7 may comprise the transverse reference stop 34.

Furthermore, the gripper 71 or the locking suction cups 75 may be coupled to a support 73 movable along the transverse axis Y. The support 73 may thus act as support and linear guide parallel to the transverse axis Y. Furthermore, the support 73 may be coupled, for example, to the bed 2 or to one of the plurality of bars 31.

The auxiliary system 7 may be disposed, for example, at a transverse side of the working area 3, parallel to the transverse axis Y, as shown, for example, in Figures 2, 3 and 4. That way, the machine 1 is constructionally simpler and less subject to breakdowns.

In another example, the auxiliary system 7 may be coupled to the raiser 32, as shown in Figures 5, 6 and 7. Furthermore, the auxiliary system 7 may be coupled to the raiser 32, for example, movably along the vertical axis Z. That way, the movement of the raiser 32 and the movement of the auxiliary system 7 along the vertical axis Z may be combined.

Advantageously, the raiser 32, or the raisers 32, may extend along the transverse axis Y and be disposed in the working area 3 in such a way as to be spaced from the auxiliary system 7 along the longitudinal axis X. That way, the auxiliary system 7 and the raiser 32, or the plurality of raisers 32, may act in conjunction to support the panel P, in particular when the auxiliary system 7 is in the active configuration and the raiser 32, or the raisers 32, is/are at the raised position. This allows panels of different sizes to be supported in a flexible, optimum manner.

Advantageously, the machine 1 may comprise a plurality of auxiliary systems 7. In particular, each auxiliary system 7 of the plurality of auxiliary systems 7 may be coupled, movably along the vertical axis Z, to a respective raiser 32 of the plurality of raisers 32. That way, the machine 1 is flexible in that loading panels of different shapes and sizes is made easier.

The following is a description of the functioning of the machine 1, that is to say, of the method for machining the panel P according to the invention.

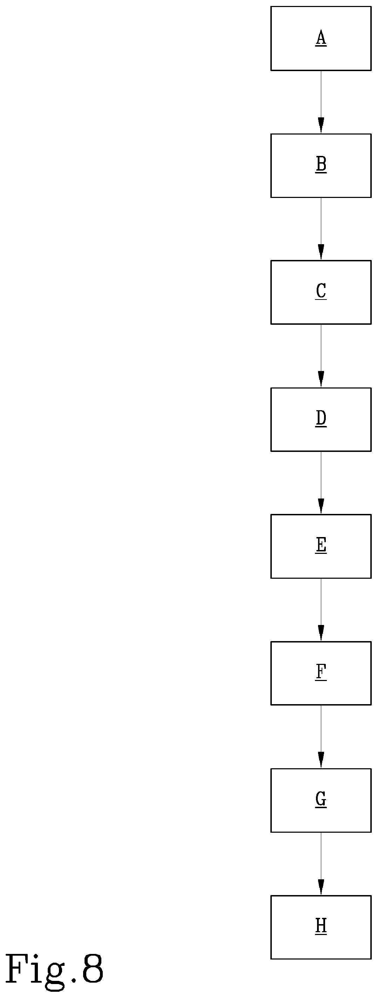

The letter A in Figure 8 denotes the step of moving the raiser 32 from the lowered position to the raised position. In particular, one or more raisers 32 may be moved. This movement may be carried out using a control, operated by the operator, for example. The control may be located, for example, in proximity to the operator side 30 so as to facilitate access to it. **If** the raisers 32 have a first raiser 32' and a second raiser 32", these may both be moved to the raised position by means of the first actuator 321' and the second actuator 321", respectively.

The panel P to be machined is rested by the operator on the raisers 32 at the raised position, in particular in the proximal zone of the working area 3. This step is labelled B in Figure 6. In this step, the operator may rest the panel P also on the auxiliary system 7, positioned in the proximal zone of the working area 3.

After resting the panel P on the raisers 32 at the raised position, the operator moves the panel P into abutment against the plurality of reference stops 34, 72, making it slide over the raisers 32, so as to reference it relative to the working area 3. In particular, the operator abuts the panel P against the transverse reference stop 34 and the longitudinal reference stop 72. This step is labelled C in Figure 6.

Once the panel P has been referenced relative to the working area 3, the auxiliary system 7 may pass from the inactive configuration to the active configuration. This step is labelled D in Figure 6. In this step, the locking gripper 71 or the locking suction cup 75 grip and lock the panel P securely to them. In particular, in the example shown in Figures 2, 3 and 4, the locking gripper 71 grips the panel P with the upper jaw 711 and the lower jaw 712. Furthermore, in the example shown in Figures 5, 6 and 7, the locking suction cup 75 moves upwards along the vertical axis Z until it comes into contact with the panel P. Once in contact, the negative pressure of the locking suction cup 75 is activated so as to hold the panel P securely against the locking suction cup 75.

In Figure 6, the letter E denotes the step of moving the auxiliary system 7 along the transverse axis Y from the proximal zone to the distal zone of the working area 3. This movement may be carried out manually by the operator or automatically by the transverse actuator 74. In the latter case, the operator may, for example, activate the transverse actuator 74 with a control which is located in proximity to the operator side 30 for easier access to it. This step of moving is denoted by the letter E in Figure 6. In an example, the raiser 32 extends along the transverse axis Y and supports the panel P during the entire step of moving the auxiliary system 7 along the transverse axis Y from the proximal zone to the distal zone of the working area 3. That way, the panel P rests on several different points (auxiliary system 7 and one or more raisers 32), so that panels of different sizes can be moved safely without being damaged on account of their weight.

Once the panel P has been moved into the distal zone of the working area, the raisers 32 can be moved to the lowered position to bring the panel P into contact with the supporting suction cups, which are designed to support and hold the panel P in place while it is being machined. This step is labelled F in Figure 6.

Before step F, i.e. during step E, the operator may rest a second panel P on the raisers 32, which are at the raised position, in the proximal zone of the working area 3, so as to advantageously speed up loading operations. If the raisers 32 have a first raiser 32' and a second raiser 32", only the second raisers 32" may be moved from the raised position to the lowered position while the step F is in progress. That way, with the first raisers 32' still in the raised position, the operator can place another panel P in the proximal zone of the working area 3 even while the step F is in progress.

The panel may then be locked in place in the working plane by the supporting suction cup 33 located in the distal zone of the working area 3. This step is labelled G in Figure 6.

Once the panel has been locked in place in the working plane in the distal zone of the working area 3, the auxiliary system 7 may be passed from the active configuration to the inactive configuration so as to release the panel P to be machined. This step is labelled H in Figure 6.

## Claims

1. A machine (1) for machining a panel, comprising:
- a plurality of supporting suction cups (33), configured to support and lock a panel (P) to be machined on a working area (3) oriented according to a working plane extending along a longitudinal axis (X) and a transverse axis (Y) perpendicular to the longitudinal axis (X), wherein the working area (3) has an operator side (30) oriented longitudinally and facing an operator zone (O), to be directly accessible to an operator positioned in the operator zone (O), the plurality of supporting suction cups (33) being distributed, in the working area (3), along the transverse axis (Y), between a zone proximal to the operator side (30) and a zone distal to the operator side (30),
- a machining unit (4), movable on the working area and configured to machine the panel (P);
- a raiser (32), movable between a lowered position, where it is disposed below the working plane, and a raised position, where it is configured to support the panel (P) at a level above the working plane; and **characterized in that** it comprises:
- an auxiliary system (7), having an active configuration, in which it is operatively coupled to the panel (P) and an inactive configuration, in which it is uncoupled from the panel (P), the auxiliary system (7) being movable along the transverse axis (Y), so as to move the panel (P) from the proximal zone to the distal zone of the working area (3) to make it easier for the operator to load the panel (P) in the zone distal to the working area (3), wherein the auxiliary system (7) comprises a transverse actuator (74) configured to move the auxiliary system (7) along the transverse axis (Y), from the proximal zone of the working area (3) to the distal zone of the working area (3).

2. The machine (1) according to claim 1, wherein the raiser (32) extends along the transverse axis (Y), from the proximal zone to the distal zone of the working area (3), and is disposed in the working area (3) spaced from the auxiliary system (7) along the longitudinal axis (X), the auxiliary system (7) and the raiser (32) cooperating to support the panel (P) when the auxiliary system (7) is in the active configuration and the raiser (32) is at the raised position.

3. The machine (1) according to claim 2, wherein the raiser (32) comprises a first raiser (32') configured to support the panel (P) in the proximal zone of the working area (3), and a second raiser (32") configured to support the panel (P) in the distal zone of the working area (3).

4. The machine (1) according to claim 3, wherein the first raiser (32') and the second raiser (32") are movable between the raised position and the lowered position independently of each other.

5. The machine (1) according to any one of the preceding claims, wherein the auxiliary system (7) is coupled to the raiser (32).

6. The machine (1) according to claim 5, wherein the auxiliary system (7) is coupled to the raisers (32) in such a way as to be movable along a vertical axis (Z) perpendicular to the working plane.

7. The machine (1) according to any one of the preceding claims, comprising a plurality of raisers (32), each of the plurality of raisers (32) extending along the transverse axis (Y), parallel to the other raisers of the plurality of raisers (32) and disposed in the working area (3) so as to be spaced from the other raisers of the plurality of raisers (32) along the longitudinal axis (X).

8. The machine (1) according to claim 7, comprising a plurality of auxiliary systems (7), each coupled to a respective raiser of the plurality of raisers (32).

9. The machine (1) according to any one of claims 1 to 5, wherein the auxiliary system (7) is disposed at a transverse side of the working area (3) parallel to the transverse axis (Y).

10. The machine (1) according to any one of the preceding claims, wherein the auxiliary system (7) comprises a gripper (71), or a locking suction cup (75), configured to grip the panel (P) when the auxiliary system (7) is in the active configuration, and to release the panel (P) when the auxiliary system (7) is in the inactive configuration.

11. The machine (1) according to any one of the preceding claims, wherein the machine (1) comprises a plurality of reference stops (34, 72) for referencing the panel (P) relative to the working area (3), and wherein the auxiliary system (7) comprises a reference stop (72) of the plurality of reference stops (34, 72).

12. The machine (1) according to any one of the preceding claims, comprising a plurality of bars (31), wherein each of the plurality of bars (31) extends along the transverse axis (Y) and supports a plurality of supporting suction cups (33), and wherein the plurality of bars (31) are disposed in the working area (3) alongside and parallel to each other.

13. A method for machining a panel (P) in a machine (1) for machining a panel (P), comprising a plurality of supporting suction cups (33), configured to support and lock a panel (P) to be machined on a working area (3) oriented according to a working plane extending along a longitudinal axis (X) and a transverse axis (Y) perpendicular to the longitudinal axis (X), wherein the working area (3) has an operator side (30) oriented longitudinally and facing an operator zone (O), to be directly accessible to an operator positioned in the operator zone (O), the plurality of supporting suction cups (33) being distributed, in the working area (3), along the transverse axis (Y), between a zone proximal to the operator side (30) and a zone distal to the operator side (30), **characterized in that** the machine comprises an auxiliary system (7), having an active configuration, in which it is operatively coupled to the panel (P) and an inactive configuration, in which it is uncoupled from the panel (P), the auxiliary system (7) being movable along the transverse axis (Y), so as to move the panel (P) from the proximal zone to the distal zone of the working area (3) to make it easier for the operator to load the panel (P) in the zone distal to the working area (3),
wherein the auxiliary system (7) comprises a transverse actuator (74) configured to move the auxiliary system (7) along the transverse axis (Y), from the proximal zone of the working area (3) to the distal zone of the working area (3),
the method comprising the following steps:
- moving a raiser (32) from a lowered position, where it is disposed below the working plane of the machine (1), to a raised position, where it is configured to support the panel (P) at a level above the working plane;
- via the operator, resting the panel (P) on the raiser (32) in the proximal zone of the working area (3);
- passing the auxiliary system (7) from an inactive configuration, where it is uncoupled from the panel (P), to an active configuration, where it is operatively coupled to the panel (P);
- moving the auxiliary system (7), via the transverse actuator (74), along the transverse axis (Y) from the proximal zone to the distal zone of the working area (3);
- moving the raiser (32) from the raised position to the lowered position;
- locking the panel (P) in the working plane by means of at least one suction cup of a plurality of supporting suction cups (33);
- passing the auxiliary system (7) from the active configuration to the inactive configuration.

14. The method according to claim 12, wherein the raiser (32) extends along the transverse axis (Y) and supports the panel (P) during the entire step of moving the auxiliary system (7) along the transverse axis (Y) from the proximal zone to the distal zone of the working area (3).

## Patentansprüche

1. Maschine (1) zur Bearbeitung einer Platte, umfassend:
- eine Vielzahl von stützenden Saugnäpfen (33), die ausgelegt sind, um eine zu bearbeitende Platte (P) auf einem gemäß einer Arbeitsebene, die sich entlang einer Längsachse (X) und einer Querachse (Y) senkrecht zu der Längsachse (X) erstreckt, ausgerichteten Arbeitsbereich (3) zu stützen und festzuhalten, wobei der Arbeitsbereich (3) eine Bedienerseite (30) aufweist, die längsgerichtet und einer Bedienerzone (O) zugewandt ist, um direkt für einen in der Bedienerzone (O) positionierten Bediener zugänglich zu sein, wobei die Vielzahl von stützenden Saugnäpfen (33) in dem Arbeitsbereich (3) entlang der Querachse (Y) zwischen einer Zone in der Nähe der Bedienerseite (30) und einer von der Bedienerseite (30) entfernten Zone verteilt ist;
- eine Bearbeitungseinheit (4), die auf dem Arbeitsbereich bewegbar und ausgelegt ist, um die Platte (P) zu bearbeiten;
- einen Heber (32), der zwischen einer abgesenkten Position, in der er unter der Arbeitsebene angeordnet ist, und einer angehobenen Position, in der er ausgelegt ist, um die Platte (P) auf einem Niveau oberhalb der Arbeitsebene zu stützen, bewegbar ist, und **dadurch gekennzeichnet, dass** sie Folgendes umfasst:
- ein Hilfssystem (7), aufweisend eine aktive Auslegung, in der es betriebswirksam mit der Platte (P) gekuppelt ist, und eine inaktive Auslegung, in der es von der Platte (P) abgekuppelt ist, wobei das Hilfssystem (7) entlang der Querachse (Y) derart bewegbar ist, dass die Platte (P) von der nahen Zone in die entfernte Zone des Arbeitsbereichs (3) bewegt wird, um dem Bediener das Laden der Platte (P) in der von dem Arbeitsbereich (3) entfernten Zone zu erleichtern, wobei das Hilfssystem (7) einen Queraktuator (74) umfasst, der ausgelegt ist, um das Hilfssystem (7) entlang der Querachse (Y) von der nahen Zone des Arbeitsbereichs (3) in die entfernte Zone des Arbeitsbereichs (3) zu bewegen.

2. Maschine (1) nach Anspruch 1, wobei sich der Heber (32) entlang der Querachse (Y) von der nahen Zone in die entfernte Zone des Arbeitsbereichs (3) erstreckt und in dem Arbeitsbereich (3) beabstandet von dem Hilfssystem (7) entlang der Längsachse (X) angeordnet ist, wobei das Hilfssystem (7) und der Heber (32) zusammenwirken, um die Platte (p) zu stützen, wenn sich das Hilfssystem (7) in der aktiven Auslegung befindet und sich der Heber (32) an der angehobenen Position befindet.

3. Maschine (1) nach Anspruch 2, wobei der Heber (32) einen ersten Heber (32') umfasst, der ausgelegt ist, um die Platte (P) in der nahen Zone des Arbeitsbereichs (3) zu stützen, und einen zweiten Heber (32"), der ausgelegt ist, um die Platte (P) in der entfernten Zone des Arbeitsbereichs (3) zu stützen.

4. Maschine (1) nach Anspruch 3, wobei der erste Heber (32') und der zweite Heber (32") unabhängig voneinander zwischen der angehobenen Position und der abgesenkten Position bewegbar sind.

5. Maschine (1) nach einem der vorhergehenden Ansprüche, wobei das Hilfssystem (7) mit dem Heber (32) gekuppelt ist.

6. Maschine (1) nach Anspruch 5, wobei das Hilfssystem (7) mit den Hebern (32) derart gekuppelt ist, dass es entlang einer vertikalen Achse (Z) senkrecht zu der Arbeitsebene bewegbar ist.

7. Maschine (1) nach einem der vorhergehenden Ansprüche, umfassend eine Vielzahl von Hebern (32), wobei sich ein jeder der Vielzahl von Hebern (32) entlang der Querachse (Y) parallel zu den anderen Hebern der Vielzahl von Hebern (32) erstreckt und in dem Arbeitsbereich (3) derart angeordnet ist, dass er von den anderen Hebern der Vielzahl von Hebern (32) entlang der Längsachse (X) beabstandet ist.

8. Maschine (1) nach Anspruch 7, umfassend eine Vielzahl von Hilfssystemen (7), die jeweils mit einem jeweiligen Heber der Vielzahl von Hebern (32) gekuppelt sind.

9. Maschine (1) nach einem der Ansprüche 1 bis 5, wobei das Hilfssystem (7) an einer Querseite des Arbeitsbereichs (3) parallel zu der Querachse (Y) angeordnet ist.

10. Maschine (1) nach einem der vorhergehenden Ansprüche, wobei das Hilfssystem (7) einen Greifer (71) oder einen Festhaltesaugnapf (75) umfasst, der ausgelegt ist, um die Platte (P) zu greifen, wenn sich das Hilfssystem (7) in der aktiven Auslegung befindet, und um die Platte (P) freizugeben, wenn sich das Hilfssystem (7) in der inaktiven Auslegung befindet.

11. Maschine (1) nach einem der vorhergehenden Ansprüche, wobei die Maschine (1) eine Vielzahl von Referenzanschlägen (34, 72) zur Referenzierung der Platte (P) relativ zu dem Arbeitsbereich (3) umfasst, und wobei das Hilfssystem (7) einen Referenzanschlag (72) der Vielzahl von Referenzanschlägen (34, 72) umfasst.

12. Maschine (1) nach einem der vorhergehenden Ansprüche, umfassend eine Vielzahl von Stäben (31), wobei sich ein jeder der Vielzahl von Stäben (31) entlang der Querachse (Y) erstreckt und eine Vielzahl von stützenden Saugnäpfen (33) stützt, und wobei die Vielzahl von Stäben (31) in dem Arbeitsbereich (3) nebeneinander und parallel zueinander angeordnet sind.

13. Verfahren zur Bearbeitung einer Platte (P) in einer Maschine (1) zur Bearbeitung einer Platte (P), umfassend eine Vielzahl von stützenden Saugnäpfen (33), die ausgelegt sind, um eine zu bearbeitende Platte (P) auf einem gemäß einer Arbeitsebene, die sich entlang einer Längsachse (X) und einer Querachse (Y) senkrecht zu der Längsachse (X) erstreckt, ausgerichteten Arbeitsbereich (3) zu stützen und festzuhalten, wobei der Arbeitsbereich (3) eine Bedienerseite (30) aufweist, die längsgerichtet und einer Bedienerzone (O) zugewandt ist, um direkt für einen in der Bedienerzone (O) positionierten Bediener zugänglich zu sein, wobei die Vielzahl von stützenden Saugnäpfen (33) in dem Arbeitsbereich (3) entlang der Querachse (Y) zwischen einer Zone in der Nähe der Bedienerseite (30) und einer von der Bedienerseite (30) entfernten Zone verteilt ist, **dadurch gekennzeichnet, dass** die Maschine ein Hilfssystem (7) umfasst, aufweisend eine aktive Auslegung, in der es betriebswirksam mit der Platte (P) gekuppelt ist, und eine inaktive Auslegung, in der es von der Platte (P) abgekuppelt ist, wobei das Hilfssystem (7) entlang der Querachse (Y) derart bewegbar ist, dass die Platte (P) von der nahen Zone in die entfernte Zone des Arbeitsbereichs (3) bewegt wird, um dem Bediener das Laden der Platte (P) in der von dem Arbeitsbereich (3) entfernten Zone zu erleichtern,
wobei das Hilfssystem (7) einen Queraktuator (74) umfasst, der ausgelegt ist, um das Hilfssystem (7) entlang der Querachse (Y) von der nahen Zone des Arbeitsbereichs (3) in die entfernte Zone des Arbeitsbereichs (3) zu bewegen,
wobei das Verfahren die folgenden Schritte umfasst:
- Bewegen eines Hebers (32) von einer abgesenkten Position, in der er unter der Arbeitsebene der Maschine (1) angeordnet ist, in eine angehobene Position, in der er ausgelegt ist, um die Platte (P) auf einem Niveau oberhalb der Arbeitsebene zu stützen;
- Auflegen der Platte (P) auf den Heber (32) in der nahen Zone des Arbeitsbereichs (3) durch den Bediener;
- Überführen des Hilfssystems (7) von einer inaktiven Auslegung, in der es von der Platte (P) abgekuppelt ist, in eine aktive Auslegung, in der es betriebswirksam mit der Platte (P) gekuppelt ist;
- Bewegen des Hilfssystems (7) über den Queraktuator (74) entlang der Querachse (Y) von der nahen Zone in die entfernte Zone des Arbeitsbereichs (3);
- Bewegen des Hebers (32) von der angehobenen Position in die abgesenkte Position;
- Festhalten der Platte (P) in der Arbeitsebene mittels mindestens eines Saugnapfs einer Vielzahl von stützenden Saugnäpfen (33);
- Überführen des Hilfssystems (7) von der aktiven Auslegung in die inaktive Auslegung.

14. Verfahren nach Anspruch 12, wobei sich der Heber (32) entlang der Querachse (Y) erstreckt und die Platte (P) während des gesamten Schritts des Bewegens des Hilfssystems (7) entlang der Querachse (Y) von der nahen Zone in die entfernte Zone des Arbeitsbereichs (3) stützt.

## Revendications

1. Machine (1) pour l'usinage d'un panneau, comprenant :
- une pluralité de ventouses de support (33) configurées pour supporter et verrouiller un panneau (P) à usiner sur une surface de travail (3) orientée selon un plan de travail s'étendant le long d'un axe longitudinal (X) et d'un axe transversal (Y) perpendiculaire à l'axe longitudinal (X), dans laquelle la surface de travail (3) comporte un côté opérateur (30) orienté longitudinalement et faisant face à une zone opérateur (O), pour être directement accessible à un opérateur positionné dans la zone opérateur (O), la pluralité de ventouses de support (33) étant réparties, dans la surface de travail (3), le long de l'axe transversal (Y), entre une zone proximale au côté opérateur (30) et une zone distale au côté opérateur (30),
- une unité d'usinage (4), mobile sur la surface de travail et configurée pour usiner le panneau (P) ;
- un releveur (32), mobile entre une position abaissée, où il est disposé en dessous du plan de travail, et une position relevée, où il est configuré pour supporter le panneau (P) à un niveau au-dessus du plan de travail ; et **caractérisée en ce qu'**elle comprend :
- un système auxiliaire (7), ayant une configuration active, dans laquelle il est couplé au panneau (P) de manière opérationnelle et une configuration inactive, dans laquelle il est découplé du panneau (P), le système auxiliaire (7) étant mobile le long de l'axe transversal (Y), de manière à déplacer le panneau (P) de la zone proximale à la zone distale de la surface de travail (3) pour faciliter le chargement du panneau (P) par l'opérateur dans la zone distale à la surface de travail (3), dans laquelle le système auxiliaire (7) comprend un actionneur transversal (74) configuré pour déplacer le système auxiliaire (7) le long de l'axe transversal (Y), de la zone proximale de la surface de travail (3) à la zone distale de la surface de travail (3).

2. Machine (1) selon la revendication 1, dans laquelle le releveur (32) s'étend le long de l'axe transversal (Y), de la zone proximale à la zone distale de la surface de travail (3), et est disposé dans la surface de travail (3) espacé du système auxiliaire (7) le long de l'axe longitudinal (X), le système auxiliaire (7) et le releveur (32) coopérant pour supporter le panneau (P) lorsque le système auxiliaire (7) est dans la configuration active et le releveur (32) est dans la position relevée.

3. Machine (1) selon la revendication 2, dans laquelle le releveur (32) comprend un premier releveur (32') configuré pour supporter le panneau (P) dans la zone proximale de la surface de travail (3), et un second releveur (32") configuré pour supporter le panneau (P) dans la zone distale de la surface de travail (3).

4. Machine (1) selon la revendication 3, dans laquelle le premier releveur (32') et le second releveur (32") sont mobiles entre la position relevée et la position abaissée indépendamment l'un de l'autre.

5. Machine (1) selon l'une quelconque des revendications précédentes, dans laquelle le système auxiliaire (7) est couplé au releveur (32).

6. Machine (1) selon la revendication 5, dans laquelle le système auxiliaire (7) est couplé aux releveurs (32) de manière à être mobile le long d'un axe vertical (Z) perpendiculaire au plan de travail.

7. Machine (1) selon l'une quelconque des revendications précédentes, comprenant une pluralité de releveurs (32), chacun de la pluralité de releveurs (32) s'étendant le long de l'axe transversal (Y), parallèlement aux autres releveurs de la pluralité de releveurs (32) et disposé dans la surface de travail (3) de manière à être espacé des autres releveurs de la pluralité de releveurs (32) le long de l'axe longitudinal (X).

8. Machine (1) selon la revendication 7, comprenant une pluralité de systèmes auxiliaires (7), chacun couplé à un releveur respectif de la pluralité de releveurs (32).

9. Machine (1) selon l'une quelconque des revendications 1 à 5, dans laquelle le système auxiliaire (7) est disposé au niveau d'un côté transversal de la surface de travail (3) parallèlement à l'axe transversal (Y).

10. Machine (1) selon l'une quelconque des revendications précédentes, dans laquelle le système auxiliaire (7) comprend un préhenseur (71), ou une ventouse de verrouillage (75), configurée pour saisir le panneau (P) lorsque le système auxiliaire (7) est dans la configuration active, et pour libérer le panneau (P) lorsque le système auxiliaire (7) est dans la configuration inactive.

11. Machine (1) selon l'une quelconque des revendications précédentes, dans laquelle la machine (1) comprend une pluralité d'arrêts de référence (34, 72) pour référencer le panneau (P) par rapport à la surface de travail (3), et dans laquelle le système auxiliaire (7) comprend un arrêt de référence (72) de la pluralité d'arrêts de référence (34, 72).

12. Machine (1) selon l'une quelconque des revendications précédentes, comprenant une pluralité de barres (31), dans laquelle chacune de la pluralité de barres (31) s'étend le long de l'axe transversal (Y) et supporte une pluralité de ventouses de support (33), et dans laquelle la pluralité de barres (31) sont disposées dans la surface de travail (3) côte à côte et parallèlement les unes aux autres.

13. Méthode pour l'usinage d'un panneau (P) dans une machine (1) pour l'usinage d'un panneau (P), comprenant une pluralité de ventouses de support (33), configurées pour supporter et verrouiller un panneau (P) à usiner sur une surface de travail (3) orientée selon un plan de travail s'étendant le long d'un axe longitudinal (X) et d'un axe transversal (Y) perpendiculaire à l'axe longitudinal (X), dans laquelle la surface de travail (3) comporte un côté opérateur (30) orienté longitudinalement et faisant face à une zone opérateur (O), pour être directement accessible à un opérateur positionné dans la zone opérateur (O), la pluralité de ventouses de support (33) étant réparties, dans la surface de travail (3), le long de l'axe transversal (Y), entre une zone proximale au côté opérateur (30) et une zone distale au côté opérateur (30), **caractérisée en ce que** la machine comprend un système auxiliaire (7), ayant une configuration active, dans laquelle il est couplé au panneau (P) de manière opérationnelle et une configuration inactive, dans laquelle il est découplé du panneau (P), le système auxiliaire (7) étant mobile le long de l'axe transversal (Y), de manière à déplacer le panneau (P) de la zone proximale à la zone distale de la surface de travail (3) pour faciliter le chargement du panneau (P) par l'opérateur dans la zone distale à la surface de travail (3),
dans laquelle le système auxiliaire (7) comprend un actionneur transversal (74) configuré pour déplacer le système auxiliaire (7) le long de l'axe transversal (Y), de la zone proximale de la surface de travail (3) à la zone distale de la surface de travail (3),
la méthode comprenant les étapes suivantes :
- déplacer un releveur (32) d'une position abaissée, où il est disposé en dessous du plan de travail de la machine (1), à une position relevée, où il est configuré pour supporter le panneau (P) à un niveau au-dessus du plan de travail ;
- par l'intermédiaire de l'opérateur, poser le panneau (P) sur le releveur (32) dans la zone proximale de la surface de travail (3) ;
- faire passer le système auxiliaire (7) d'une configuration inactive, où il est découplé du panneau (P), à une configuration active, où il est couplé au panneau (P) de manière opérationnelle ;
- déplacer le système auxiliaire (7), par l'intermédiaire de l'actionneur transversal (74), le long de l'axe transversal (Y) de la zone proximale à la zone distale de la surface de travail (3) ;
- déplacer le releveur (32) de la position relevée à la position abaissée ;
- verrouiller le panneau (P) dans le plan de travail au moyen d'au moins une ventouse d'une pluralité de ventouses de support (33) ;
- faire passer le système auxiliaire (7) de la configuration active à la configuration inactive.

14. Méthode selon la revendication 12, dans laquelle le releveur (32) s'étend le long de l'axe transversal (Y) et supporte le panneau (P) pendant toute l'étape de déplacer le système auxiliaire (7) le long de l'axe transversal (Y) de la zone proximale à la zone distale de la surface de travail (3).
